# EUROPEAN PATENT APPLICATION

(11) **EP 1 336 747 A2**
(43) Date of publication of application: **20.08.2003**
(21) Application number: 03001001.1
(22) Date of filing: 17.01.2003
(51) Int. Cl.: F02M 21/02, F02M 51/06

(54) **Electrical injector for gaseous fuel**

(30) Priority: 18.02.2002 IT PC20020007
(71) Applicant: POLIAUTO di P. Parietti & C. S.n.c., 29100 Piacenza PC (IT)
(72) Inventor: Parietti, Pietro, 29100 Piacenza PC (IT)
(74) Representative: La Ciura, Salvatore

(57) **Abstract**

This invention relates to an electrical injector for gaseous fuel including:
- a body (1) with a cavity that constitutes the seating (3) of a shutter device (7)
- a gas feed duct (2) which leads from the said seating (3) to the engine
- an electromagnet (4) positioned above the said duct, at a short distance from it, and
- a shutter device constituted by a plate (7) made of ferromagnetic material situated in the said space between the said seating (3) and the said electromagnet (4), wherein the said plate (7) is not supported by a membrane or driven by a piston, but is unconnected to the other parts of the device and can move freely between a gas flow closing position, in which it rests on the seating (3), and a gas flow opening position, in which the said plate (7) is attracted by the said electromagnet (4) and moved away from said seating.

The result is an injector which has no parts subject to repetitive high-frequency deformation cycles, thus eliminating the risk of malfunctions caused by wear on parts that perform fast, repetitive movements.

## Description

This invention relates to an electrical injector for gaseous fuel, wherein the active part is constituted by a shutter in the form of a thin, light plate completely independent of all the other parts, which is made of ferromagnetic material, is free to move under the influence of an electromagnet, and has very low inertia.

The result is an injector which has no parts subject to repetitive highfrequency deformation cycles, thus eliminating the risk of malfunctions caused by wear on parts that perform fast, repetitive movements.

The problem that the invention is designed to solve is to produce a suitable fuel feed for an engine using the gas injection system (such as LPG or methane gas) with a system similar to that used for petrol injection, ie. using an electrical injector controlled with square-wave voltage (a single injector in the case of single-point injection, and one injector for each engine cylinder in the case of multi-point injection).

When this voltage is at its highest level (typically 12 V d.c.), it must open the injector, allowing the fuel originating from a source at a regulated constant pressure to flow towards the intake valve of the engine; when the voltage returns to its lowest level (zero volts) the injector must close, and must remain closed in the absence of applied voltage.

The difficulty of manufacture lies in the fact that:
- the mechanical and other characteristics of a gas fuel injector must be similar to those of a petrol injector; the opening and closing times must be maintained as far as possible, and the corresponding time lags must be equal, or of the same order of magnitude
- the passage through which the fuel flows needs to be much larger for a gas injector than a petrol injector, leading to difficulties caused by the need to move a shutter with a large size and mass at a very high speed and frequency.

Petrol is injected into the engine in the liquid state; the volume of fuel that flows in a given time unit is therefore low, and the diameter of the fuel pipe can be very small.

The mobile shutter can therefore be very small and lightweight, ie. characterised by low inertia and consequently able to respond to the electrical command instantly, or after a very short time lag.

In the case of gas, however, the need for a larger duct means that the shutter must also be larger, and therefore have greater inertia.

The present invention consists of an electrical injector for gaseous fuel, fitted with a duct suitable for the passage of gas in a sufficient quantity to fuel the engine, but at the same time equipped with a mobile shutter which is sufficiently small and light to be driven with the same timing as used for petrol injectors.

The installation in which this injector will be fitted can therefore conveniently use a simple, inexpensive electronic control unit which is easy to connect to the original circuit of the vehicle because it can use as the input signal the voltage waveform generated by the electronic unit already present in the vehicle; in the original installation, the said waveform serves to feed the corresponding petrol injector.

The advantage is that the waveform which controls each petrol injector already intrinsically contains the results of all the calculations and corrections performed in real time by the original electronic unit, which in turn, at its input, uses all the signals received from the various sensors and transducers in the vehicle.

The fact that this original waveform can be used is particularly important in modern vehicles equipped with advanced OBD (On Board Diagnostic) systems which, in order to reduce fuel consumption and pollution, recognise and signal on the dashboard any fuelling problems, or at any rate any discrepancy between the actual fuelling and the theoretical fuelling previously memorised and considered ideal for that engine.

This invention will now be described in detail, by way of example but not of limitation, by reference to the annexed figures wherein:
- figure 1 schematically illustrates an engine fuelling system comprising the electrical injector in accordance with the invention
- figure 2 shows a cross-section of an electrical injector in accordance with the invention
- figure 3 shows another preferred embodiment of the electrical injector in accordance with the invention.

### Description of the invention

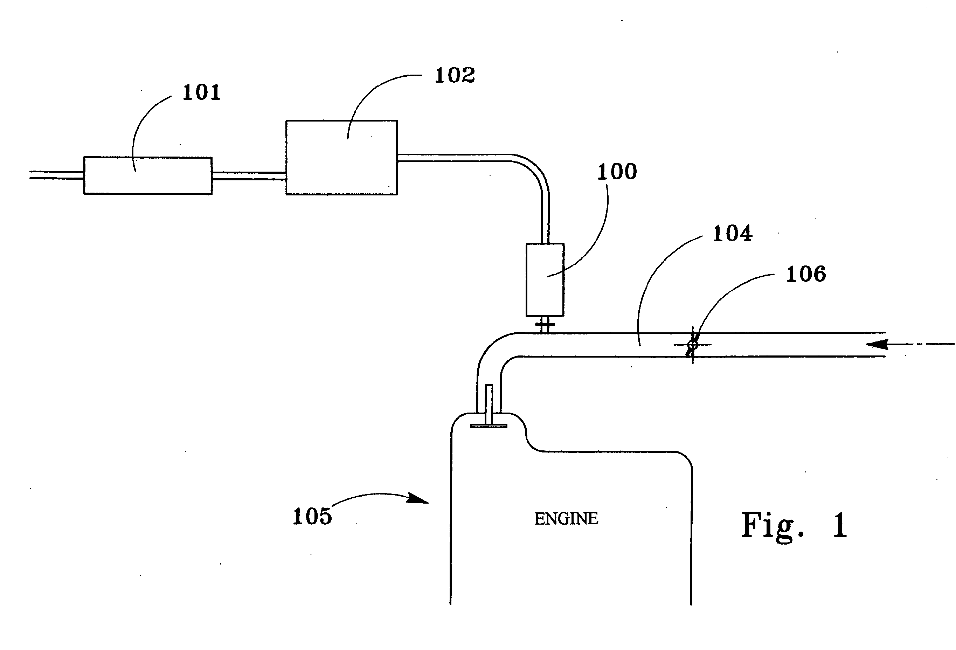

The installation in which the electrical injector in accordance with the invention is housed is schematically illustrated in figure 1.

The case of a single-cylinder engine is described here for the sake of simplicity; however, the invention also obviously applies to engines with more than one cylinder.

In the figures, number 101 indicates an atomiser from which gas travels to a pressure regulator 102 and then to the electrical injector in accordance with the invention, shown as number 100.

The electrical injector is fitted to intake manifold 104 which leads to engine 105, downstream of throttle 106.

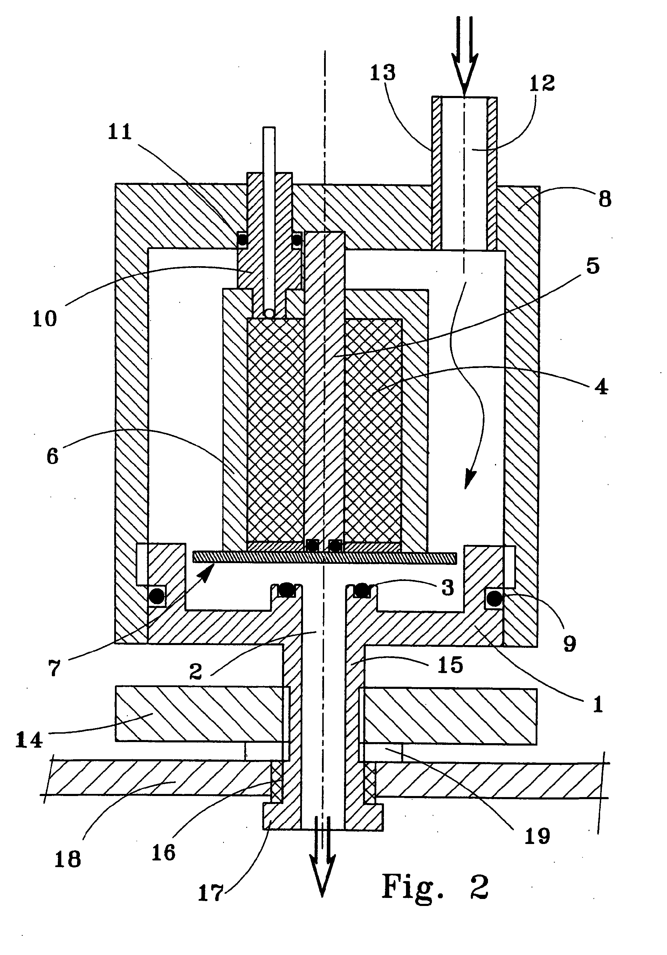

The electrical gas injector in accordance with the invention (see figure 2) is constituted by a substantially discoidal body 1 with a hollow interior to which an outlet duct 2, fitted with a seating with a seal ring 3, leads.

Above duct 2 and at a short distance from it there is a solenoid 4, which can be wound directly on a ferromagnetic core 5 to increase the efficiency of the device. The ferromagnetic core also acts as the supporting bobbin for the solenoid.

A ferromagnetic casing 6 completes the outer part of the magnetic circuit.

A plate 7, also made of ferromagnetic material and fitted in the hollow part of body 1 between solenoid 4 and outlet duct 2, is mobile and independent, ie. entirely unconnected to all the other parts. The said plate constitutes the light mobile shutter that opens and closes outlet duct 2, either resting on or being raised above the seal seating with rubber ring 3, depending on the electrical command received from the solenoid.

A lid 8 hermetically seals the injector, forming a seal with body 1 by means of ring 9.

The coil power wires exit through tubes 10, which are integral with casing 6. Tubes 10 pass through two holes in lid 8, a seal being formed by rings 11.

The gaseous fuel enters the injector through duct 12 of a connector pipe 13 fitted directly to the injector lid where it forms a seal.

The gas enters the injector, at the pre-set regulated pressure, through duct 13.

The gas cannot exit from the injector unless the solenoid is excited. In this case, plate shutter 7 rests on ring 3 of the seating where it forms a seal; the pressure of the gas acts entirely on one side of the plate shutter, and only partly on the other side, causing a resultant force that forms a seal between shutter 7 and seal ring 3.

When the solenoid is powered, the electromagnetic force overcomes the seal force and raises the plate shutter, bringing it into contact with core 5 (this is the state illustrated in figure 2); outlet duct 2 consequently opens, enabling the pressurised gas to flow to the engine.

When power to the solenoid is cut off, the gas flow will return the plate shutter, which is no longer retained by the electromagnetic force, to the seal seating.

This cycle is repeated continuously at a frequency that generally corresponds to the rotation speed of the engine, as in the case of petrol injectors.

In accordance with a preferred embodiment, a system comprising a ring nut 14, threaded on stem 15 of the body, is installed to secure the electromagnet to the intake manifold of the engine, forming a seal.

The end of the injector, fitted with a rubber seal ring 16 and collar 17, is inserted into a through hole in the wall of intake manifold 18; when ring nut 14, which rests on washer 19, is screwed down, the rubber dilates to form a sealed coupling between the injector and the manifold.

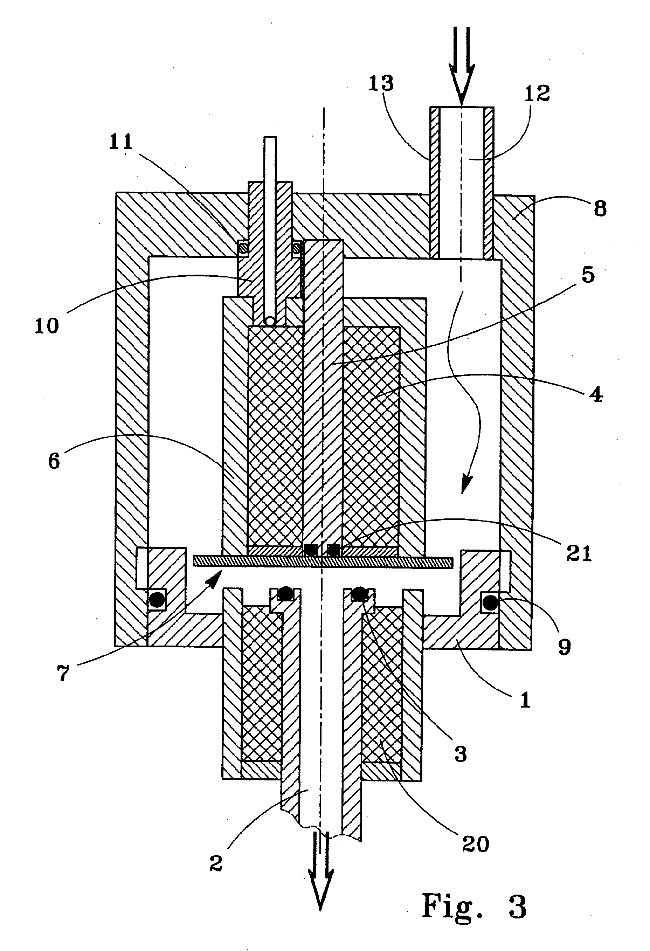

Several variations on the invention are possible. For example:
- the gas inlet tube, shown here with its axis parallel to the axis of the outlet duct, can be made with its axis orthogonal to the axis of the outlet duct if necessary, depending on convenience or practical requirements, to allow easy installation of the injector on the intake manifold of the engine; however, the embodiment illustrated is preferable, because if the gas travels along an almost straight route there will be less flow resistance, turbulence and irregular operation
- the electrical connections can also be performed differently, for example by integrating a suitable sealed connector, chosen from among those normally on sale, into the injector lid
- in addition to the main electromagnet, a second electromagnet 20 (see figure 3), which is identical to the first but operates in phase opposition, can be installed; this second electromagnet, unlike the first, attracts plate shutter 7 towards the seal seating, thus contributing, together with the pressure difference between the inlet and outlet, to cutting off the gas flow through the injector
- a second rubber ring 21 (see figure 3) may also be present in addition to the one on the seal seating; this second ring serves solely to damp the impact of the plate shutter against the solenoid core when the injector opens, as damping the impact during both opening and closing prevents shutter rebound and attenuates oscillation noise.

The invention could also be advantageously used to make a cut-off solenoid valve for liquid or gaseous fuels; in this case, the mobile piston normally used for the solenoid valve will be constituted by the plate shutter, offering advantages in terms of size and cost. In the traditional, piston-activated type of solenoid valve, a spring helps to form the seal when the solenoid is not excited; similarly in the case of the plate shutter, a spring can help to form the seal of the plate against the seating with the rubber ring.

An expert in the field could devise various modifications and variations, all of which should be deemed to fall within the ambit of this invention.

## Claims

1. Electrical injector for gaseous fuel, **characterised in that** it includes a shutter in the form of a thin, light plate, completely independent of all the other parts, which is made of ferromagnetic material, has very low inertia, and is free to move under the influence of an electromagnet between a position in which it closes the gas feed duct to the engine manifold and a raised position in which it opens the said duct.

2. Electrical injector for gaseous fuel as claimed in claim 1, **characterised in that** it includes:
• a body with a cavity that constitutes the seating of the shutter device
• a gas feed duct which leads from the said seating to the engine
• an electromagnet positioned above the said duct, at a short distance from it, and
• a shutter device constituted by a plate made of ferromagnetic material situated in the said seating between the said duct and the said electromagnet, wherein the said plate is not supported by a membrane or driven by a piston, but is unconnected to the other parts of the device and can move freely between a gas flow closing position, in which it rests on the end of the said duct, and a gas flow opening position, in which the said plate is attracted by the said electromagnet and moved away from the said duct.

3. Electrical injector for gaseous fuel according to claim 2, **characterised in that** it includes a rubber ring at the end of the gas feed duct, said ring being retained in a cavity at one end of the said duct and forming a seal that prevents the passage of gas when the plate is resting on the seating.

4. Electrical injector for gaseous fuel as claimed in each of the preceding claims, **characterised in that** it includes another solenoid installed in the electrical injector, which is similar to the previous solenoid but operates in phase opposition, attracting the plate shutter towards the seal seating and thus contributing, together with the pressure difference between the inlet and outlet, to cutting off the gas flow through the injector.

5. Electrical injector for gaseous fuel as claimed in each of the preceding claims, **characterised in that** a rubber ring is fitted on one or both of the seal housings to damp the oscillating shutter at the closing stage and the stage in which the shutter rests on the solenoid core during the injector opening time, to prevent shutter rebound and attenuate oscillation noise.

6. Electrical injector for gaseous fuel as claimed in each of the preceding claims, **characterised in that** the plate shutter is thin and therefore light, so that opening times equal or similar to those employed for the corresponding petrol injector can be used, with the result that an electronic control unit designed to exploit the original waveform used to control petrol injectors and to exploit all the input signals received from the various sensors and transducers in the vehicle can be used to control gas injectors.

7. Electrical injector for gaseous fuel as claimed in each of the preceding claims, **characterised in that** in the case of engines with more than one cylinder, the individual injectors form a single rail, sealed on the outer diameter, that distributes the gas to the various cylinders.

8. Electrical injector for gaseous fuel as claimed in each of claims 1 to 6, **characterised in that** it includes a system that secures it to the engine air intake manifold, constituted by a screw expansion system, with a rubber seal on the diameter.

9. Electrical injector for gaseous fuel as claimed in claim 3, **characterised in that** the input pressure of the gas is manifested on both sides of the plate shutter and that the input gas pressure is neutral in relation to the shutter when the shutter is open, whereas it produces a seal when the shutter rests on the seating, by exploiting the closing thrust caused by the difference between the two shutter surfaces subject to the input pressure.

10. Cut-off solenoid valve for gas fuelling units endothermic engines, **characterised in that** it includes, as cut-off part, a plate completely independent of all the other parts which is made of ferromagnetic material, has very low inertia, and is free to move under the influence of an electromagnet between a position in which it closes the gas flow and a raised position in which it opens the said flow, elastic means designed to move the said plate into the duct closing position being fitted.
